# FASCICULE DE BREVET EUROPEEN

(11) **EP 1 056 620 B1**
(45) Date de publication et mention de la délivrance du brevet: **28.11.2001**
(21) Numéro de dépôt: 99913168.3
(22) Date de dépôt: 17.02.1999
(51) Int. Cl.: B60R 1/06

(54) **PROCEDE ET DISPOSITIF DE COMMANDE DU CHAUFFAGE D'UN RETROVISEUR DE VEHICULE AUTOMOBILE**
VERFAHREN UND VORRICHTUNG ZUM BEHEIZEN EINES RÜCKBLICKSPIEGELS EINES KRAFTFAHRZEUGES
METHOD AND DEVICE FOR HEATING A MOTOR VEHICLE DRIVING MIRROR

(30) Priorité: 27.02.1998 FR 9802408
(43) Date de publication de la demande: 06.12.2000
(73) Titulaire: SIEMENS AUTOMOTIVE S.A., 31036 Toulouse Cédex (FR)
(72) Inventeur: TORNARE, Jean-Marc, F-47000 Agen (FR)
(74) Mandataire: Zedlitz, Peter, Dipl.-Inf.
(86) Numéro de dépôt international: EP9901034
(87) Numéro de publication internationale: WO9943515

(56) Documents cités:
- DE-A- 2 627 918
- DE-A- 4 340 850
- DE-A- 4 411 280
- PATENT ABSTRACTS OF JAPAN vol. 011, no. 235 (M-612), 31 juillet 1987 & JP 62 046734 A (HONDA MOTOR CO LTD), 28 février 1987
- PATENT ABSTRACTS OF JAPAN vol. 018, no. 637 (M-1716), 5 décembre 1994 & JP 06 247263 A (NISSAN MOTOR CO LTD), 6 septembre 1994

## Description

La présente invention concerne un procédé et un dispositif de commande du réchauffage d'un rétroviseur extérieur de véhicule automobile.

Il est déjà connu de placer une résistance à l'intérieur d'une vitre de véhicule automobile et de provoquer le dégivrage de cette vitre par passage d'un courant à l'intérieur de cette résistance. Cette technique est couramment employée pour permettre le dégivrage de la vitre arrière d'un véhicule.

Certains véhicules sont également munis de moyens de dégivrage des rétroviseurs extérieurs, fonctionnant sur le même principe.

Ainsi, dans les véhicules les plus sophistiqués, on trouve maintenant dans chaque portière, un dispositif de commande de dégivrage des rétroviseurs, un dispositif électronique de commande de l'ouverture des portes à distances, un dispositif électrique de commande du mouvement des vitres, etc. Bien entendu, l'accumulation de tels dispositifs complique la réalisation des modules électroniques à intégrer dans les portières et en augmente le coût.

Le but de la présente invention est de commander un dégivrage des rétroviseurs sans augmenter le nombre de modules électroniques implantés dans la portière, et donc en utilisant au mieux ceux déjà existants.

A cet effet, la présente invention concerne un procédé de commande du réchauffage d'un rétroviseur de véhicule automobile, le dit véhicule étant notamment muni d'un dispositif de commande électrique du mouvement des vitres, le dit procédé est caractérisé en ce qu'il consiste à utiliser le dispositif de montée et de descente d'une même vitre pour piloter le réchauffage du rétroviseur.

Grâce à de telles dispositions, la commande du dégivrage du rétroviseur est réalisée par le module « lève-vitre », sans augmenter le nombre de modules à implanter dans chaque portière. Ceci permet de réaliser pratiquement « gratuitement » cette nouvelle fonction de dégivrage.

La présente invention concerne également un dispositif de réchauffage de rétroviseur mettant en oeuvre le procédé ci-dessus indiqué.

Avantageusement, c'est une unité centrale de calcul déjà existante qui provoque la commande simultanée du moteur d'entraînement des vitres dans le sens de la descente et de la montée. L'invention consiste donc à connecter la résistance de dégivrage en un point approprié du circuit de commande du mouvement des vitres.

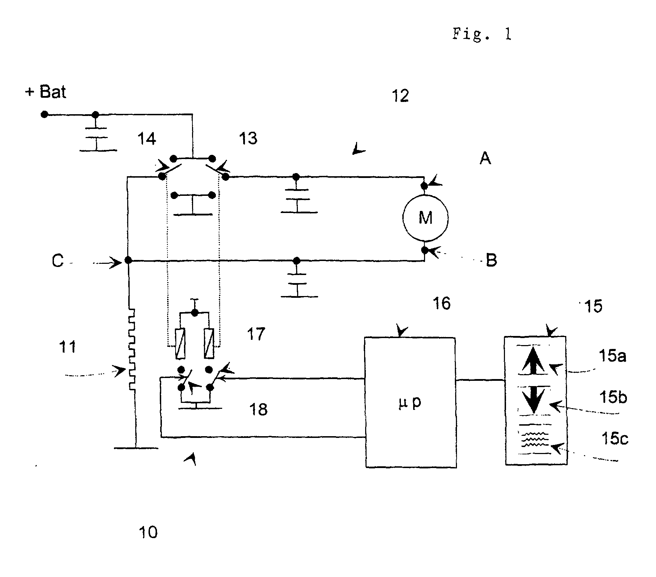

D'autres objets, caractéristiques et avantages de la présente invention ressortiront d'ailleurs de la description qui suit, à titre d'exemple non limitatif et en référence à la figure 1 annexée. Cette figure 1 illustre le schéma de montage d'un dispositif de commande de réchauffage d'un rétroviseur.

Un tel dispositif de réchauffage 10 comporte une résistance de chauffage 11 placée dans le rétroviseur à dégivrer (non représenté). Cette résistance de chauffage est reliée au circuit électronique de commande 12 du moteur M d'entraînement d'une vitre. Un tel circuit de commande 12 permet de manière classique de provoquer la montée ou la descente d'une vitre en fonction de la fermeture d'un premier 13 ou d'un second 14 composant. Ce composant est, dans le cas le plus classique, un relais mais peut également être constitué par un dispositif à semi-conducteurs. L'ensemble du circuit 12 est alimenté par la batterie + Bat. Le fonctionnement d'un tel moteur dit de « lève-vitres » est connu et ne sera que brièvement rappelé ci-après.

Lorsque le conducteur désire faire monter ou descendre une vitre, il donne un ordre de fermeture ou d'ouverture par l'intermédiaire d'un clavier 15 (en général, il appuie simplement sur un bouton 15a ou 15b indiquant le sens du déplacement souhaité de la vitre). Cet ordre est transmis à une unité centrale de calcul 16 (un micro-processeur) qui va alors commander un ensemble de relais 17, 18 commandant la fermeture de l'un des deux relais 13 ou 14 au + Bat, l'autre relais étant fermé à la masse. Dès que le relais 13 est fermé au + Bat, et le relais 14 à la masse (par exemple), le moteur M est alimenté et est soumis à une différence de potentiel (dans un sens donné) entre ces deux bornes A et B. Ce faisant, le moteur est entraîné dans un sens de rotation donné (en fonction du sens de la différence de potentiel aux bornes du moteur). La vitre est donc entraînée par exemple à la montée.

Dans le cas où c'est le second relais 14 qui est fermé au + Bat et le relais 13 à la masse, la différence de potentiel établie aux bornes A et B du moteur est inverse. Le sens de rotation du moteur M et du déplacement de la vitre est alors inversé (par exemple à la descente).

Bien entendu, lorsque aucun mouvement de la vitre n'est désiré, les deux relais 13 ou 14 sont fermés à la masse.

L'invention consiste à utiliser ce circuit de commande des vitres 12 pour commander également le réchauffage 10 du miroir du rétroviseur.

A cet effet, il suffit de relier une extrémité de la résistance de chauffage 11 de ce miroir au point C du circuit de commande des vitres 12. L'autre extrémité de cette résistance de chauffage est reliée à la masse.

Lorsque le conducteur désire mettre en fonctionnement le dispositif de dégivrage du miroir, il appuie sur un bouton (15c). L'ordre de dégivrage est transmis à l'unité centrale 16 qui interprète cet ordre comme une commande simultanée de la fermeture de des deux relais 13 et 14 au + Bat.

En provoquant la fermeture simultanée de ces deux relais au + Bat, la différence de potentiel aux homes du moteur M d'entraînement des vitres est nulle. De ce fait, ce moteur n'est pas entraîné. La vitre n'est donc pas entraînée en mouvement. Par contre, la batterie alimente la résistance de chauffage du miroir. Le rétroviseur est donc réchauffé.

L'invention permet, en utilisant astucieusement le circuit de commande électrique 12 des vitres, de commander le dégivrage du rétroviseur. Ce réchauffage de rétroviseur est réalisé pratiquement gratuitement, puisqu'il utilise le microprocesseur 16 et le circuit de commande 12 déjà mis en place dans le véhicule.

Avantageusement, la fermeture simultanée au + Bat des relais 13 et 14, ce qui correspond au niveau du circuit de commande 12 à un ordre de montée et de descente simultané d'une même vitre (cas impossible, donc non utilisé), est utilisé pour provoquer le réchauffage du rétroviseur. On a ainsi avantageusement utilisé une possibilité de commande inutilisée pour réaliser, avec le circuit de commande des vitres, le réchauffage du rétroviseur.

On notera que dans le cas où une commande 15a ou 15b d'entraînement de vitre est donnée par le conducteur, cette commande est traitée en priorité par rapport à celle de dégivrage 15c (qui peut très bien être donnée en même temps par le conducteur). La priorité au mouvement de la vitre est donnée, car ces mouvements sont relativement rapides. Le conducteur ne se rendra pas compte que son ordre de dégivrage a été mis en attente le temps de réaliser le mouvement demandé pour la vitre. En outre, cette priorité au mouvement de la vitre augmente très peu le temps de fonctionnement du dispositif de dégivrage jusqu'à obtention d'un dégivrage complet du miroir.

Bien entendu, la présente invention n'est pas limitée au mode de réalisation décrit. Ainsi le circuit de commande de vitre 12 pourrait tout aussi bien réchauffer plusieurs rétroviseurs, voire la vitre arrière du véhicule.

## Revendications

1. Procédé de commande du réchauffage (10) d'un rétroviseur de véhicule automobile, le dit véhicule étant notamment muni d'un dispositif de commande électrique (12) du mouvement des vitres, le dit procédé est **caractérisé en ce qu'**il consiste à :
- actionner simultanément un dispositif de montée et un dispositf de descente d'une même vitre pour provoquer le réchauffage du rétroviseur.

2. Procédé selon la revendication 1, **caractérisé en ce qu'**une commande (15a, 15b) de mouvement d'une vitre est prioritaire par rapport à une commande (15c) de réchauffage du rétroviseur.

3. Dispositif mettant en oeuvre le procédé selon la revendication 1 ou 2, **caractérisé en ce qu'**il comporte un premier composant (13) commandant un moteur d'entraînement (M) d'une vitre dans le sens de la montée et un second composant (14) commandant ce moteur d'entraînement (M) dans le sens de la descente, l'actionnement simultané de ces deux composants (13, 14) vers la batterie entraînant le passage d'un courant dans une résistance de réchauffage (11) d'un rétroviseur, tandis que le moteur (M) permettant l'entraînement de la vitre n'est pas entraîné.

4. Dispositif selon la revendication 3, **caractérisé en ce que** la commande des deux composants (13, 14) est réalisée par l'intermédiaire d'une unité centrale de calcul (16) qui interprète un ordre de réchauffage (15c) du rétroviseur donné par le conducteur, comme une commande simultanée des deux composants.

5. Dispositif selon l'une quelconque des revendications 3 ou 4, **caractérisé en ce que** les premier et second composants (13, 14) sont des relais.

6. Dispositif selon l'une quelconque des revendications 3 ou 4, **caractérisé en ce que** les dits premier et second composants (13, 14) sont des dispositifs à semi-conducteurs.

## Patentansprüche

1. Verfahren zum Steuern der Beheizung (10) eines Kraftfahrzeug-Rückblickspiegels, wobei das Fahrzeug insbesondere mit einer Vorrichtung zur elektrischen Steuerung (12) der Bewegung der Fensterscheiben versehen ist, wobei dieses Verfahren **dadurch gekennzeichnet ist, dass** es besteht aus:
- einer gleichzeitigen Betätigung einer Vorrichtung zum Heben und einer Vorrichtung zum Senken derselben Fensterscheibe, zwecks Beheizung des Rückblickspiegels.

2. Verfahren nach Anspruch 1, **dadurch gekennzeichnet, dass** eine Steuerung (15a, 15b) zum Bewegen einer Fensterscheibe Priorität gegenüber einer Steuerung (15c) zum Beheizen des Rückblickspiegels hat.

3. Vorrichtung zum Durchführen des Verfahrens nach Anspruch 1 oder 2, **dadurch gekennzeichnet, dass** sie aufweist: ein erstes Bauelement (13), das einen Fensterheber-Motor (M) in Heberichtung ansteuert, und ein zweites Bauelement (14), das den Fensterheber-Motor (M) in Senkrichtung ansteuert, wobei die gleichzeitige Betätigung dieser beiden Bauelemente (13, 14) zwecks Verbindung mit der Batterie einen Stromfluß in einem Heizwiderstand (11) eines Rückspiegels bewirkt, während der Fensterheber-Motor (M) nicht betätigt wird.

4. Vorrichtung nach Anspruch 3, **dadurch gekennzeichnet, dass** die Steuerung der beiden Bauelemente (13, 14) über eine zentrale Rechnereinheit (16) erfolgt, die einen vom Fahrer gegebenen Befehl zum Beheizen (15c) des Rückblickspiegels als gleichzeitige Ansteuerung der beiden Bauelemente interpretiert.

5. Vorrichtung nach Anspruch 3 oder 4, **dadurch gekennzeichnet, dass** das erste und zweite Bauelement (13,14) Schaltrelais sind.

6. Vorrichtung nach Anspruch 3 oder 4, **dadurch gekennzeichnet, dass** das erste und zweite Bauelement (13, 14) Halbleitervorrichtungen sind.

## Claims

1. Method for controlling the heating (10) of a rear-view mirror of a motor vehicle, said vehicle being, in particular, equipped with an electrical device (12) for controlling the movement of the windows, said process being **characterised in that** it involves:
- simultaneously actuating a device for raising a window and a device for lowering the same window to bring about the heating of the rear-view mirror.

2. Method according to Claim 1, **characterised in that** an order (15a, 15b) for the movement of a window has priority over an order (15c) for the heating of the rear-view mirror.

3. Device employing the process according to Claim 1 or 2, **characterised in that** it comprises a first component (13) controlling a motor (M) for driving a window in the raising direction and a second component (14) controlling this motor (M) for driving in the lowering direction, the simultaneous actuation of these two components (13, 14) toward the battery causing a current to pass in a heating resistor (11) of a rear-view mirror whereas the motor (M) for driving the window is not driven.

4. Device according to Claim 3, **characterised in that** the two components (13, 14) are controlled by means of a central arithmetic unit (16) which interprets a heating instruction (15c) for the rear-view mirror given by the driver as a simultaneous order for the two components.

5. Device according to any of Claims 3 or 4, **characterised in that** the first and second components (13, 14) are relays.

6. Device according to any of Claims 3 or 4, **characterised in that** said first and second components (13, 14) are semiconductor devices.
